# EUROPÄISCHE PATENTSCHRIFT

(11) **EP 0 624 493 B1**
(45) Veröffentlichungstag und Bekanntmachung des Hinweises auf die Patenterteilung: **02.01.1997**
(21) Anmeldenummer: 94106943.7
(22) Anmeldetag: 04.05.1994
(51) Int. Cl.: B60R 9/04

(54) **Dachreling für Fahrzeuge**
Roof rails for vehicles
Rails de toit pour véhicules

(30) Priorität: 11.05.1993 DE 4315583
(43) Veröffentlichungstag der Anmeldung: 17.11.1994
(73) Patentinhaber: Happich Fahrzeug-Dachsysteme GmbH, D-42285 Wuppertal (DE)
(72) Erfinder: Flüss, Gerrit, D-42105 Wuppertal (DE); Kolodziej, Klaus, D-42327 Wuppertal (DE)

(56) Entgegenhaltungen:
- DE-A- 3 626 926
- US-A- 3 451 602
- US-A- 3 519 178

## Beschreibung

Die Erfindung bezieht sich auf eine Dachreling für Fahrzeuge mit einem rohrförmigen Galeriestab und Stützfüßen, die diesen zumindest an den Endbereichen ggf. aber auch mittig abstützen und daran jeweils mittels eines Gewindebolzens und einer darauf geschraubten Mutter festgelegt sind.

Eine Dachreling für Fahrzeuge besteht üblicherweise aus zwei sich in Fahrzeuglängsrichtung etwa parallel zueinander erstreckenden, an den Längsrändern des Fahrzeugdachs über Stützfüße befestigten Galeriestäben. An den Galeriestäben können Querträger zur Aufnahme von Dachlasten befestigt werden.

Die Verbindung zwischen einem Galeriestab und den Stützfüßen erfolgt - vgl. DE 36 26 926 A1 - herkömmlicherweise jeweils mittels einer Inbusschraube, die in einem hohlen Stützfuß verläuft und kopfseitig abgestützt ist, einen schräg verlaufenden Durchbruch im Galeriestab durchsetzt und in eine stirnseitig schräg angeschnittene Zylindermutter einschraubbar ist. Beim Anziehen der Inbusschraube vom offenen Ende des Stützfußes her wird der Boden des Galeriestabs zwischen der schrägen Stirnfläche des Stützfußes reibschlüssig eingespannt. Die bekannte Verbindungsart ist an sich zuverlässig, vermag aber nicht ein Drehen der Stützfüße gegenüber dem Galeriestab im Vormontagezustand zu verhindern, was jedoch wünschenswert ist. Ein besonderer Nachteil bei der bekannten Verbindungsart besteht in der recht aufwendigen Montage, die ein gezieltes Einschieben der Zylindermutter in die Galeriestaböffnung und ein Auffinden der Gewindebohrung verlangt.

Der vorliegenden Erfindung liegt nun die Aufgabe zugrunde, bei einer Dachreling der eingangs genannten Art eine besonders einfach herzustellende Verbindungsanordnung zwischen einem Galeriestab und den daran festzulegenden Stützfüßen aufzuzeigen.

Diese Aufgabe wird erfindungsgemäß dadurch gelöst, daß der Gewindebolzen einen Kopf nach Art einer Hammerschraube aufweist, der durch eine Schlitzöffnung im Galeriestab steckbar und durch eine 90°-Drehbewegung am Galeriestab axial festlegbar ist und daß zwei axiale Teilbereiche des Bolzenschafts als Vierkant zur radialen Festlegung des Gewindebolzens in der Schlitzöffnung des Galeriestabs und einem Vierkantloch im zugehörigen Stützfuß ausgebildet sind.

Durch diese erfindungsgemäßen Maßnahmen wird neben der Ausgleichsmöglichkeit von Längentoleranzen und einer Verdrehsicherung zwischen den Stützfüßen und dem Galeriestab insbesondere eine wesentliche Montageerleichterung erreicht. Der Gewindebolzen braucht lediglich mit seinem Kopf durch die Schlitzöffnung im Galeriestab gesteckt und hiernach gedreht werden und kann sodann den jeweiligen Stützfuß aufnehmen für dessen Festlegung am Galeriestab es dann lediglich noch des Aufschraubers der Mutter bedarf.

Eine vorteilhafte Weiterbildung der Erfindung besteht darin, daß die in den Endbereichen des Galeriestabs auflageseitig eingebrachten Schlitzöffnungen randoffen auslaufen. Damit ergibt sich für die endseitigen Stützfüße die Möglichkeit, daran die Gewindebolzen vorzumontieren. Die Stützfüße können damit durch stirnseitiges Einschieben der Gewindebolzenköpfe in die Schlitzöffnungen am Galeriestab angebracht werden.

Eine weitere Ausgestaltung der Erfindung sieht vor, daß jeder Stützfuß eine Metallhülse mit Vierkantloch aufweist und daß die Metallhülse innerhalb einer die Außenkontur des jeweiligen Stützfußes bildenden Kunststoffkappe sitzt. Die Metallhülse sichert die Krafteinleitung der Dachlast auf eine Tragestruktur des Fahrzeugdachs und ermöglicht es, den jeweiligen Stützfaß im übrigen als einfach und kostengünstig herzustellendes Kunststoff-Spritzgußteil auszubilden und dadurch auch Gewicht einzusparen.

Ausführungsbeispiele der Erfindung werden nachfolgend anhand der Zeichnung näher erläutert. Es zeigen:
- Fig. 1: den vertikalen Längsschnitt durch einen Galeriestabendbereich mit einem endseitigen Stützfuß,
- Fig. 2: einen Schnitt, etwa folgend der Linie A-A in Fig. 1,
- Fig. 3: einen Schnitt, etwa folgend der Linie B-B in Fig. 1,
- Fig. 4: den vertikalen Längsschnitt durch einen Galeriestab in dessen Längsmitte mit einem Stützfuß,
- Fig. 5: einen Schnitt, etwa folgend der Linie A-A in Fig. 4 und
- Fig. 6: einen Schnitt, etwa folgend der Linie B-B in Fig. 4.

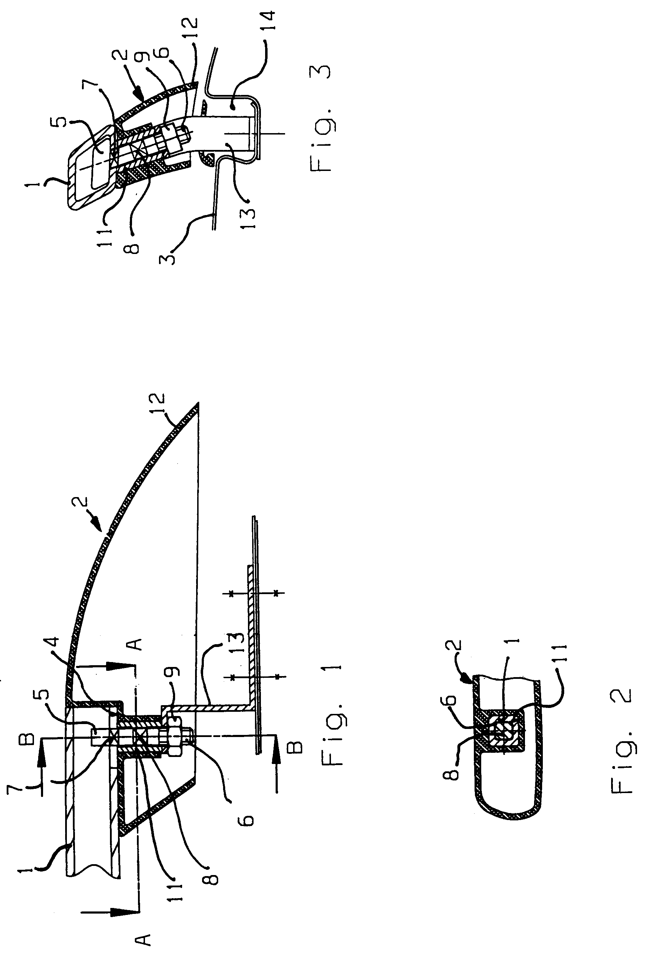

Fig. 1 und 2 zeigen einen Galeriestab 1, der aus einem Aluminiumrohr bestehen kann sowie einen daran endseitig angebrachten Stützfuß 2, über den der Galeriestab 1 an einem Fahrzeugdach 3 abstützbar ist. Am freien Endbereich weist der Galeriestab 1 an seiner auf dem Stützfuß zur Auflage kommenden Seite eine Schlitzöffnung 4 auf. Hierdurch wird eine seitlich offene T-Nut gebildet. In diese T-Nut greift der Kopf 5 eines Gewindebolzens 6 ein, der nach Art einer Hammerschraube ausgebildet ist. Der Kopf 5 ist so bemessen, daß er durch die Schlitzöffnung 4 hindurch in den Galeriestabhohlraum einsteckbar und in diesem drehbar ist. In den Fig. 1 und 2 ist der Kopf 5 des Gewindebolzens 6 in seiner am Gewindestab 1 gegen Herausziehen gesicherten Position gezeigt, in der er gegenüber der Einsteckposition um 90° gedreht ist.

Der Gewindebolzen 6 dient zur verdrehsicheren Verbindung von Galeriestab 1 und Stützfuß 2. Daher ist er mit einem ersten Vierkant 7, der sich unmittelbar an den Kopf 5 anschließt, einem zweiten Vierkant 8, der dem ersten axial beabstandet ist und mit einem eine aufgeschraubte Mutter 9 tragenden Außengewinde am freien Schaftbereich ausgebildet. Der erste Vierkant 7 greift in die Schlitzöffnung 4 ein und legt damit den Gewindebolzen 6 verdrehsicher am Galeriestab 1 fest. Der zweite Vierkant 8 greift in ein im Stützfaß 2 ausgebildetes Vierkantloch 10 ein und legt damit den Stützfuß 2 verdrehsicher am Gewindebolzen 6 und damit auch verdrehsicher am Galeriestab 1 fest.

Im Ausführungsbeispiel nach den Fig. 1 bis 3 besteht der Stützfuß 2 aus einer im Inneren den zweiten Vierkant 8 aufweisenden Metallhülse 11 sowie einer diese umgebenden Kunststoffkappe 12, die zweckmäßigerweise als Kunststoff-Spritzgußteil ausgebildet ist. Dabei bietet es sich bei der Herstellung der Kunststoffkappe 12 an, die Metallhülse 11 als Einlegeteil zu umspritzen, obgleich es natürlich auch möglich ist, die Metallhülse 11 nachträglich in die Kunststoffkappe 12 einzupressen oder die Kunststoffkappe 12 auf die Metallhülse 11 zu klipsen.

Der Stützfuß 2 wird seinerseits von einer Aufnahmestütze 13 getragen, die an der Dachkonstruktion, beispielsweise in einem hier ausgebildeten Dachkanal 14 zu befestigen ist. Die Aufnahmestütze 13 ist am Gewindebolzen 6 angeschlossen, am unteren Stirnende der Metallhülse 11 abgestützt und über die Mutter 9 am Gewindebolzen 6 festgelegt.

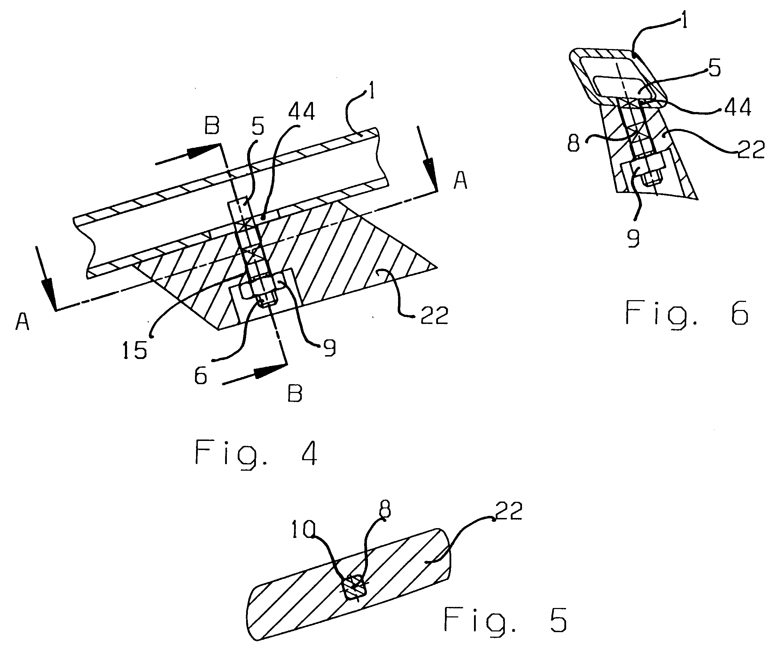

Fig. 4 bis 6 zeigen einen als Mittelstütze dienenden Stützfuß 22 für einen Galeriestab 1. Eine solche Mittelstütze kann bei längeren Galeriestäben und/oder bei hoher Lastbeanspruchung nützlich sein. Der Stützfuß 22 weist eine Durchgangsbohrung 15 auf, die im mittleren Bereich als Vierkantloch 10 (vgl. insbesondere Fig. 5) ausgebildet ist. Für die Befestigung des Stützfußes 22 dient ein Gewindebolzen 6, wie er anhand der Fig. 1 bis 3 beschrieben worden ist. Das Durchstecken des Bolzenkopfs 5 wird durch eine Schlitzöffnung 44 ermöglicht, die sich von der Schlitzöffnung 4 lediglich dadurch unterscheidet, daß sie nicht randoffen ausgebildet ist.

## Patentansprüche

1. Dachreling für Fahrzeuge mit einem rohrförmigen Galeriestab (1) und Stützfüßen (2, 22), die diesen zumindest an den Endbereichen ggf. aber auch mittig abstützen und daran jeweils mittels eines Gewindebolzens (6) und einer darauf geschraubten Mutter (9) festgelegt sind, dadurch gekennzeichnet, daß der Gewindebolzen (6) einen Kopf (5) nach Art einer Hammerschraube aufweist, der durch eine Schlitzöffnung (4, 44) im Galeriestab (1) steckbar und durch eine 90°-Drehbewegung am Galeriestab (1) axial festlegbar ist und daß zwei axiale Teilbereiche des Bolzenschafts als Vierkant (7, 8) zur radialen Festlegung des Gewindebolzens (6) in der Schlitzöffnung (4, 44) des Galeriestabs (1) und einem Vierkantloch (10) im zugehörigen Stützfuß (2) ausgebildet sind.

2. Dachreling nach Anspruch 1, dadurch gekennzeichnet, daß die in den Endbereichen des Galeriestabs (1) auflageseitig eingebrachten Schlitzöffnungen (4) randoffen auslaufen.

3. Dachreling nach Anspruch 1 oder 2, dadurch gekennzeichnet, daß jeder Stützfuß (2) eine Metallhülse (11) mit Vierkantloch (10) aufweist und daß die Metallhülse (11) innerhalb einer die Außenkontur des jeweiligen Stützfußes (2) bildenden Kunststoffkappe (12) sitzt.

## Claims

1. Roof railing for motor vehicles with a tubular side rail (1) and brackets (2, 22) to support the same at least at the ends and, if indicated, also at the center, secured to the same in each case by means of a threaded stud (6) and a nut (9) screwed onto the same, characterized by the threaded stud (6) exhibiting a head (5) in the style of a hammer-head bolt which can be passed through a slot (4, 44) in the side rail (1), being able to be secured axially at the side rail (1) by way of a 90° rotational movement, by two axial sections of the stud shaft being in the form of a square (7, 8) to ensure radial securing of the threaded stud (6) in the slot (4, 44) at the side rail (1) and by a square hole (10) being formed in the associated bracket (2).

2. Roof railing in accordance with Claim 1, characterized by the slots (4) formed at the contact surface at the ends of the side railing (1) being open at one end.

3. Roof railing in accordance with Claim 1 or 2, characterized by each bracket (2) exhibiting a metal sleeve (11) with square hole (10), this metal sleeve (11) being seated in one of the plastic caps (12) forming the outside contour of the particular bracket (2).

## Revendications

1. Galerie de toit pour véhicule comportant une barre de galerie (1) tubulaire et des pieds d'appui (2, 22), qui soutiennent celle-ci au moins aux zones d'extrémité mais éventuellement aussi au milieu et sont fixés chacun sur celle-ci au moyen d'un boulon (6) et d'un écrou (9) vissé sur celui-ci, caractérisée en ce que le baulon (6) du type d'une vis à tête rectangulaire, peut être introduit à travers une ouverture en fente (4, 44) pratiquée dans la barre de galerie (1) et peut être fixé axialement sur la barre de galerie (1), par une rotation de 90° et en ce que deux zones partielles axiales de la tige du boulon sont conformées en carré (7, 8) pour la fixation radiale du bouton (6) dans l'ouverture en fente (4, 44) de la barre de galerie (1) et dans un trou carré (10), pratiqué dans le pied d'appui (2) correspondant.

2. Galerie de toit selon la revendication 1, caractérisée en ce que les ouvertures en fente (4), pratiquées côté appui dans les zones d'extrémité de la barre de galerie (1), se terminent par des bords ouverts.

3. Galerie de toit selon la revendication 1 ou 2, caractérisée en ce que chaque pied d'appui (2) présente une douille métallique (11) avec trou carré (10) et en ce que la douille métallique (11) est placée à l'intérieur d'un capuchon en matière plastique (12), formant le contour extérieur du pied d'appui (2) respectif.
